# EUROPEAN PATENT APPLICATION

(11) **EP 4 738 599 A1**
(43) Date of publication of application: **06.05.2026**
(21) Application number: 24841949.1
(22) Date of filing: 11.03.2024
(51) Int. Cl.: H01M 50/531

(54) **BATTERY UNIT AND BATTERY PACK COMPRISING SAME**

(30) Priority: 18.07.2023 CN 202321880697 U
(71) Applicant: Sunwoda Mobility Energy Technology Co., Ltd., Shenzhen, Guangdong 518107 (CN)
(72) Inventor: CHEN, Guodong, Shenzhen, Guangdong 518107 (CN); TAN, Jian, Shenzhen, Guangdong 518107 (CN); GE, Rongyun, Shenzhen, Guangdong 518107 (CN); FANG, Zewei, Shenzhen, Guangdong 518107 (CN); ZHOU, Zaoyuan, Shenzhen, Guangdong 518107 (CN)
(74) Representative: Meyer, Thorsten
(86) International application number: PCT/CN2024/081049
(87) International publication number: WO 2025/015946

(57) **Abstract**

The present disclosure relates to a battery cell and a battery pack including the same. The battery cell includes a housing; a cell assembly, wherein the cell assembly comprises a jelly roll and a plurality of first tabs and a second tab, the plurality of first tabs and the second tab are electrically connected to the jelly roll, the plurality of first tabs are spaced apart, the plurality of first tabs and the second tab are spaced apart in a first direction X and have opposite polarities; a top cover; a first terminal post, electrically connected to the plurality of first tabs; a second terminal post, electrically connected to the second tab. In the present disclosure, by arranging the battery cells in the battery pack, not only the space utilization can be improved, but also the fast-charging performance can be enhanced.

## Description

### CROSS REFERENCE TO RELATED DISCLOSURES

The present disclosure claims the benefit of Chinese Patent Application No. 202321880697.7, filed on July 18, 2023, the entire contents of which are incorporated herein by reference.

### TECHNICAL FIELD

The present disclosure relates to the field of new energy technology, and in particular to a battery cell and a battery pack including the same.

### BACKGROUND

In the field of lithium batteries, the current-carrying area formed between tabs and electrodes is usually increased to improve charging efficiency of a battery. In the related techniques, the tabs are usually connected to the electrodes in a one-to-one correspondence, resulting in long charging time and poor fast-charging performance.

### SUMMARY OF THE DISCLOSURE

An objective of the present disclosure is to provide a battery cell and a battery pack comprising the battery cell, and the battery cell can have improved space utilization.

To achieve the above objective, the present disclosure provides a battery cell, comprising:
a housing, having an opening;
a cell assembly, disposed in the housing, wherein the cell assembly comprises a jelly roll and a plurality of first tabs, the plurality of first tabs are each disposed at an end of the jelly roll facing the opening and electrically connected to the jelly roll, and the plurality of first tabs are arranged at intervals in a first direction;
a top cover, disposed at the opening and covering the opening;
a first terminal post, arranged on the top cover, wherein the first terminal post is welded to the plurality of first tabs simultaneously to electrically connect the first terminal post to the plurality of first tabs.

In some examples of the present disclosure, the battery cell further comprises:
a second terminal post, arranged on the top cover;
wherein the cell assembly further comprises a second tab disposed at the end of the jelly roll facing the opening and electrically connected to the jelly roll, the plurality of first tabs and the second tab are spaced apart in the first direction, the second tab has opposite polarity to the plurality of first tabs, and the second terminal post is welded to the second tab to electrically connect the second terminal post to the second tab.

In some examples of the present disclosure, a plurality of the second tabs are provided, the second terminal post is welded to the plurality of the second tabs simultaneously, and a number of the plurality of first tabs is different from that of the plurality of the second tabs.

In some examples of the present disclosure, in the first direction, a numerical relationship among a length L₁ of the jelly roll, a number N₁ of the plurality of first tabs, a length L₂ of each of the plurality of first tabs, a number N₂ of the second tabs and a length L₃ of each of the second tabs is as follows: 1/3<(N₁×L₂+N₂×L₃)/L₁<2/3.

In some examples of the present disclosure, the plurality of first tabs are staggered in a second direction, and the first direction and the second direction are intersected.

In some examples of the present disclosure, the plurality of first tabs are limited to two first tabs, and a projection of the first terminal post onto a plane of the top cover has overlaps with projections of the two first tabs onto the plane of the top cover, enabling the first terminal post to be welded to the two first tabs simultaneously.

In some examples of the present disclosure, in the first direction, the first terminal post is positioned in a position between the two first tabs, allowing a portion of the first terminal post contacting one of the two first tabs to be welded to the one of the two first tabs.

In some examples of the present disclosure, in a second direction, the first terminal post is positioned in a position between the two first tabs, allowing the portion of the first terminal post contacting one of the two first tabs to be welded to the one of the two first tabs;
wherein the first direction is intersected with the second direction.

In some examples of the present disclosure, a plurality of cell assemblies are provided, the pluralities of first tabs on the pluralities of cell assemblies are welded together, and the second tabs of the plurality of cell assemblies are welded together, so that the plurality of cell assemblies are connected to one another.

In some examples of the present disclosure, the battery cell further comprises:
a connecting piece, which is arranged between the first terminal post and each of the plurality of first tabs in a third direction Z; the connecting piece is welded to the first electrode and each of the plurality of first tabs respectively, allowing the first terminal post to be welded to the plurality of first tabs simultaneously;
wherein the third direction is intersected with the first direction.

In some examples of the present disclosure, a distance between immediately adjacent two of the plurality of first tabs in the first direction is defined as L₄, and 6 mm ≤ L₄ ≤ 18 mm.

Another objective of the present disclosure is to provide a battery pack, comprising:
a shell;
a plurality of the above-mentioned battery cells, arranged in the shell and electrically connected to one another.

Compared with the prior art, the battery cell of the present disclosure has the following advantages.

In the battery cell of the present disclosure, a plurality of first tabs are provided and spaced apart from one another, and the first terminal post is electrically connected to the plurality of first tabs simultaneously. Compared with the prior art, an electrical connection of the first terminal post to the plurality of first tabs can increase the current-carrying area and improve a charging speed of the battery cell, thereby enhancing the fast charging performance of the battery cell. Furthermore, in the prior art, one terminal post involves only one tab, resulting in a relatively large thickness for the tab after bending. However, in the present disclosure, since a plurality of first tabs are provided, each terminal post for the jelly roll is assigned to multiple first tabs simultaneously. Thus, each of the first tabs has a smaller thickness after bending, thereby reducing the space reserved for the connections of the first tabs and saving space. Furthermore, since the plurality of first tabs are arranged at intervals in the first direction, the space utilization of the jelly roll in the first direction is also improved.

The battery pack of the present disclosure comprising the aforementioned battery cells as a whole not only has improved fast-charging performance but also has enhanced space utilization.

### BRIEF DESCRIPTION OF THE DRAWINGS

Figure 1 is an exploded view of a battery cell according to an example of the present disclosure.
Figure 2 is a schematic view of a cell assembly of the battery cell according to the example shown in Figure 1.
Figure 3 is an exploded view of a battery cell according to another example of the present disclosure.
Figure 4 is a schematic view of a cell assembly of the battery cell according to the example shown in Figure 3.

List of reference signs: 1. housing; 2. jelly roll; 3. first tab; 4. second tab; 5. top cover; 6. first terminal post; 7. second terminal post; 8. cell assembly; 11. opening;
X. first direction; Y. second direction; Z. third direction.

### DETAILED DESCRIPTION

Specific embodiments of the present disclosure are further described in detail below, in conjunction with the accompanying drawings and examples. The following examples are intended to illustrate the present disclosure and are not intended to limit its scope.

It should be noted that, in the description of the present disclosure, terms indicating orientations or positional relationships, such as, "center", "longitudinal", "transverse", "upper", "lower", "front", "rear", "left", "right", "vertical", "horizontal", "top", "bottom", "inner" and "outer", etc., are based on the orientations or positional relationships shown in the accompanying drawings. They are solely intended to facilitate and simplify the description of the present disclosure, rather than to indicate or imply that a device or a component referred to must have a specific orientation, or be constructed or operated in a specific orientation. Therefore, these terms should not be construed as a limitation of the present disclosure. Furthermore, terms "first", "second" and "third" are used for descriptive purposes only, and should not be construed to indicate or imply relative importance.

It should be noted that, in the description of the present disclosure, unless otherwise specified or limited, terms "assembled", "communicated" and "connected" should be interpreted broadly. For example, these terms may mean fixed, removable, or integral connections; alternatively, they may mean mechanical or electrical connections; alternatively, they may mean direct connections or indirect connections through an intermediary; alternatively, they may mean internal communication between two components. Those skilled in the art will understand the specific meanings of these terms in the present disclosure based on the specific circumstances.

In addition, in the description of this disclosure, unless otherwise specified, "a plurality of / multiple" means two or more.

Those skilled in the art will understand the specific meanings of the above terms in the present disclosure.

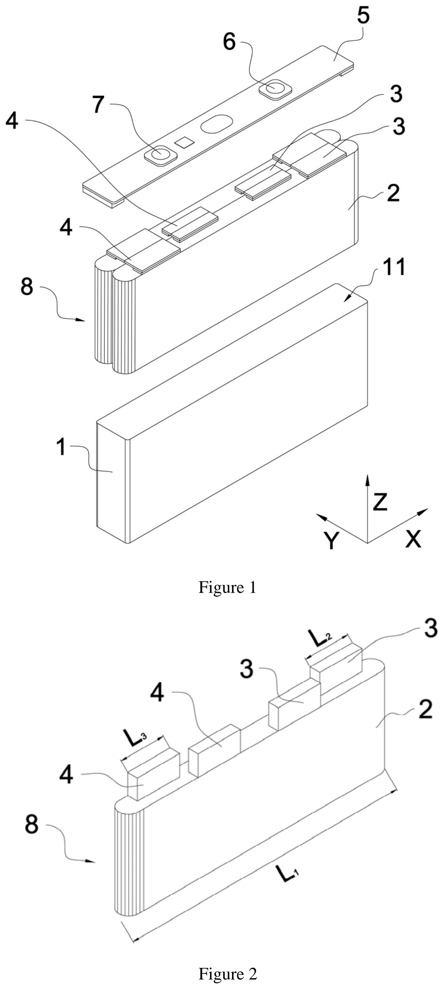

With reference to Figures 1 and 2, a battery cell according to a preferred embodiment of the present disclosure is provided, and the battery cell comprises a housing 1, a cell assembly 8, a top cover 5, and a first terminal post 6.

The housing 1 has an opening 11. The opening 11 is communicated with an interior of the housing 1.

The cell assembly 8 is disposed in the housing 1 and comprises a jelly roll 2 and a plurality of first tabs 3. The jelly roll 2 is disposed in the housing 1, while the plurality of first tabs 3 are each disposed at an end of the jelly roll 2 facing the opening 11 and electrically connected to the jelly roll 2. The plurality of first tabs 3 are arranged at intervals in a first direction X. A plurality of cell assemblies 8 can be arranged in the housing 1. In this example, two cell assemblies 8 are disposed in the housing 1. In other examples, the number of the cell assemblies 8 can be adjusted as needed.

The jelly roll 2 is formed by winding a cathode sheet, an anode sheet and a separator. Both the cathode sheet and the anode sheet have an area coated with an active material and an area uncoated with the active material. The uncoated areas of the cathode sheet and the anode sheet are cut by die-cutting or laser-cutting to form cathode tabs and anode tabs, respectively. Furthermore, the plurality of first tabs 3 provided can be positioned in dispersed positions. Compared to the prior art, the plurality of first tabs 3 in dispersed positions are thinner.

The battery cell of this example is rectangular in shape. The first direction X represents a length direction of the battery cell. There are also a second direction Y and a third direction Z, wherein the second direction Y represents a width direction of the battery cell, and the third direction Z represents a height direction of the battery cell. The first direction X, the second direction Y and the third direction Z are mutually intersected with one another.

The top cover 5 is disposed at the opening 11 and covers the opening 11. The top cover 5 encloses the cell assembly 8 with the housing 1.

The first terminal post 6 is disposed on the top cover 5, and welded to the plurality of first tabs 3 simultaneously so as to electrically connect the first terminal post 6 to the plurality of first tabs 3.

The welding between the first terminal post 6 and the plurality of first tabs 3 can be achieved by ultrasonic welding or laser welding.

By providing the plurality of first tabs 3 and connecting the first terminal post 6 to the plurality of first tabs 3 simultaneously, an electrical connection is achieved between the first terminal post 6 and the plurality of first tabs 3, and meanwhile the current conduction rates between the first terminal post 6 and the plurality of first tabs 3 are also increased, thereby improving fast charging performance.

The plurality of first tabs 3 are formed by the electrode sheets in the jelly roll 2. In the prior art, there is only one cathode tab and one anode tab, so the cathode tab/the anode tab covers a large number of cathode sheets/anode sheets and has a large thickness after bending. However, in this example, the plurality of first tabs 3 are provided, and the electrode sheets of the jelly roll 2 are assigned to the plurality of first tabs 3 so that each of the plurality of first tabs 3 covers fewer electrode sheets and is thinner after bending. That is to say, each of the plurality of first tabs 3 has a smaller dimension in the third direction Z, and there is no need to reserve overmuch space for these first tabs. Consequently, the space reserved for connections of the first tabs can be reduced, thereby improving space utilization and allowing the saved space to be used for other components.

Moreover, the plurality of first tabs 3 are arranged at intervals in the first direction X, which also improves the space utilization of the jelly roll 2 in the first direction X.

In some examples, a distance between immediately adjacent two of the plurality of first tabs 3 in the first direction X is defined as L₄, and 6 mm ≤ L₄ ≤ 18 mm.

If L₄ < 6 mm, there will be a risk that the immediately adjacent two of the plurality of first tabs 3 are folded together. If L₄ > 18 mm, the arrangement of a second tab 4 may be affected due to a limited dimension of the jelly roll 2 itself. Therefore, in the case of 6 mm ≤ L₄ ≤ 18 mm, the immediately adjacent two of the plurality of first tabs 3 can be prevented from folding together, while avoiding affecting the arrangement of the second tab 4.

When measuring the distance L₄, a common dimensional measurement tool, such as a ruler or a tape measure, can be employed.

Specifically, when measuring the distance L₄, any one of two opposite edges of immediately adjacent two of the plurality of first tabs 3 is defined as a reference edge, and a distance between the reference edge and the other edge is measured along the first direction X using a dimensional measurement tool. The distance between the reference edge and the other edge is measured multiple times, and measurements obtained are then averaged to obtain the distance L₄ between the immediately adjacent two of the plurality of first tabs 3.

In some examples, the battery cell further comprises a second terminal post 7, which is arranged on the top cover 5.

The cell assembly 8 further comprises a second tab 4, which is disposed at the end of the jelly roll 2 facing the opening 11 and electrically connected to the jelly roll 2. The plurality of first tabs 3 and the second tab 4 are spaced apart in the first direction X, and the second tab 4 has opposite polarity to the plurality of first tabs 3. Further, the second terminal post 7 is welded to the second tab 4 to electrically connect the second terminal post 7 to the second tab 4.

In this example, the plurality of first tabs 3 are configured as cathode tabs, and the second tab 4 is configured as an anode tab.

In this example, a plurality of cell assemblies 8 are provided. The pluralities of first tabs 3 of the plurality of cell assemblies 8 are welded together, and the second tabs 4 of the plurality of cell assemblies 8 are welded together, so that the plurality of cell assemblies 8 are connected to one another. In this example, two cell assemblies 8 are provided. In other examples, the number of the cell assemblies 8 can be adjusted based on actual needs.

The battery cell also comprises a connecting piece, which is arranged between the first terminal post 6 and the plurality of first tabs 3 in the third direction Z. The connecting piece is welded to the first electrode 6 and each of the plurality of first tabs 3 respectively, allowing the first terminal post 6 to be welded to the plurality of first tabs 3 simultaneously. Another connecting piece may also be provided between the second terminal post 7 and the second tab 4 in the third direction Z, and the second terminal post 7 is welded to the second tab 4 through the another connecting piece. The welding herein can be achieved by laser welding or ultrasonic welding. Of course, in some examples, the connecting pieces may be omitted. As shown in Figure 1, the first terminal post 6 and the plurality of first tabs 3 are directly welded, and the second terminal post 7 and the second tab 4 are also directly welded.

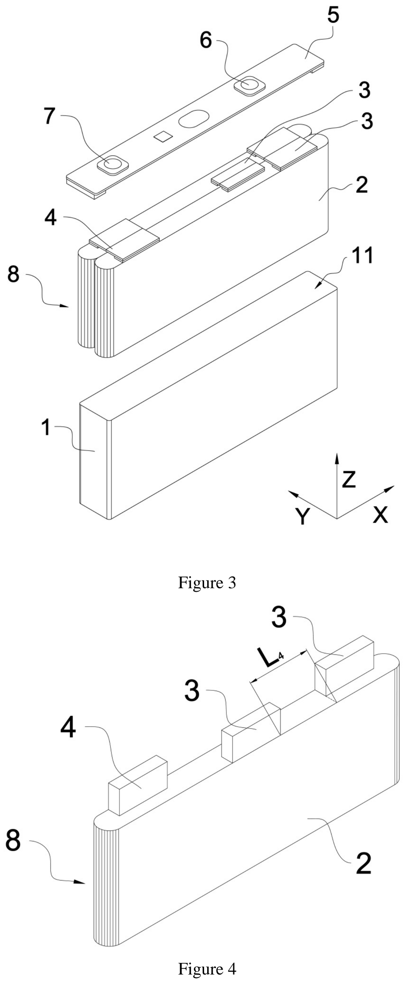

With reference to Figure 3 and Figure 4, a plurality of second tabs 4 are provided, the second terminal post 7 is welded to the plurality of second tabs 4 simultaneously, and the number of the first tabs 3 is different from that of the second tabs.

Similar to the design of the plurality of first tabs 3, the plurality of second tabs 4 are also provided, so that each of the plurality of second tabs also can be thinner. That is to say, each of the plurality of second tabs 3 has a smaller dimension in the third direction Z, and there is no need to reserve overmuch space for these second tabs. Consequently, the space reserved for the connections of the second tabs is reduced, thereby improving space utilization. Since both of the first tabs 3 and the second tabs 4 are thinner than those in the prior art, a dimension of the battery cell can be reduced, thereby improving space utilization.

Specifically, each cell assembly 8 is provided with only one second tab 4, two cell assemblies 8 are provided in the housing 1, and a total of four first tabs 3 are provided.

The welding between the second terminal post 7 and the second tabs 4 can be achieved by ultrasonic welding, laser welding, or by welding both of them to one connecting piece.

In other examples, with reference to Figures 1 and 2, the plurality of first tabs 3 and the plurality of second tabs 4 may be arranged in equal numbers. In specific production implementations, the numerical relationship between the plurality of first tabs 3 and the second tabs 4 can be adjusted according to actual requirements.

With reference to Figure 2, in the first direction X, a numerical relationship among a length L₁ of the jelly roll 2, a number N₁ of the plurality of first tabs 3 and a length L₂ of each of the plurality of first tabs 3, and a number N₂ of the second tabs and a length L₃ of each of the second tabs 4 is as follows: 1/3<(N₁×L₂+N₂×L₃)/L₁<2/3. If (N₁×L₂+N₂×L₃)/L₁ is less than 1/3, a weld area between the first terminal post 6 and the plurality of first tabs 3, and a weld area between the second terminal post 7 and the second tabs 4 both will be too small, thereby compromising welding quality. If (N₁×L₂+N₂×L₃)/L₁ is greater than 2/3, nearby structures, such as an explosion-proof valve or a liquid injection hole, will be interfered. Therefore, the above arrangement can avoid an excessively small weld area between the first terminal post 6 and the first tabs 3 and an excessively small weld area between the second terminal post 7 and the second tabs 4, thereby ensuring the charging efficiency of the battery cell. Further, such arrangement can also prevent the explosion-proof valve or the liquid injection hole from being interfered, thereby effectively utilizing space.

When measuring the lengths L₁, L₂, and L₃, a common dimensional measurement tool, such as a ruler or a tape measure, can be employed to perform measurement along the first direction X.

When measuring the length L₁, an edge of the jelly roll 2 perpendicular to the first direction X is defined as a reference edge, and a distance between the reference edge and an opposite edge perpendicular to the first direction X is measured along the first direction X using a dimensional measurement tool. The distance between the reference edge and the opposite edge was measured multiples times, and measurements obtained are averaged to obtain the length L₁ of the jelly roll 2 in the first direction X.

When measuring the length L₂, a jelly roll 2 with an unbent first tab 3, or a jelly roll with a bent first tab, which is returned to the position shown in Figure 2 before measurement, is taken. An edge of the first tab 3 perpendicular to the first direction X is defined as a reference edge, and a distance between the reference edge and an opposite edge perpendicular to the first direction X is measured along the first direction X using a dimensional measurement tool. The distance between the reference edge and the opposite edge is measured multiples times, and measurements obtained are averaged to obtain the length L₂ of the first tab 3 in the first direction X.

When measuring the length L₃, a jelly roll 2 with an unbent second tab 4, or a jelly roll with a bent second tab 4, which is returned to the position shown in Figure 2 before measurement, is taken. An edge of the second tab 4 perpendicular to the first direction X is defined as a reference edge, and a distance between the reference edge and an opposite edge perpendicular to the first direction X is measured along the first direction X using a dimensional measurement tool. The distance between the reference edge and the opposite edge is measured multiples times, and measurements obtained are averaged to obtain the length L₃ of the second tab 4 in the first direction X.

The plurality of first tabs 3 are taken herein to exemplarily and detailedly explain the number and positions of these first tabs 3. The plurality of second tabs 4 can be arranged similarly to the plurality of first tabs 3.

The plurality of first tabs 3 are staggered in the second direction Y. Staggering the plurality of first tabs in one direction means that the plurality of first tabs are spaced apart in that direction and their projections in that direction do not overlap or intersect. This staggered arrangement not only facilitates electrical connections of multiple jelly rolls 2, but also facilitates the welding of each first tab to the first terminal post 6. Of course, for jelly rolls 2 in different sizes, the plurality of first tabs 3 can also be staggered only in the first direction X or only in the second direction Y. When multiple second tabs 4 are provided, they can also be arranged similarly, and detailed description will be omitted here.

In the case of two first tabs 3, a projection of the first terminal post 6 onto a plane of the top cover 5 has overlaps with projections of the two first tabs 3 onto the plane of the top cover 5, enabling the first terminal post 6 to be welded to the two first tabs 3 simultaneously. With reference to Figure 1, this means that at least a portion of the first terminal post 6 is contacted with the two first tabs 3 respectively, and the welding between the first terminal post 6 and the two first tabs 3 can be achieved by welding their corresponding contact areas. Such configuration facilitates the welding between the first terminal post 6 and the two first tabs 3 and can be easily implemented in production. When two second tabs 4 are arranged, the second terminal post 7 and the two second tabs 4 can be arranged similarly, and detailed description will be omitted here.

In the first direction X, the first terminal post 6 is positioned in a position between the two first tabs 3, allowing the portion of the first terminal post 6 contacting one of the two first tabs 3 to be welded to said one of the two first tabs 3.

Specifically, the first terminal post 6 can reserve a sufficient welding area for each of the two first tab 3 in the first direction X, allowing the two first tabs 3 to be welded to the first terminal post 6. When two second tabs 4 are arranged, they can be arranged similarly, and detailed description will be omitted here.

In the second direction Y, the first terminal post 6 is positioned in a position between the two first tabs 3, allowing the portion of the first terminal post 6 contacting one of the two first tabs 3 to be welded to said one of the two first tabs 3.

The first terminal post 6 can offer a sufficient welding area for each of the two first tabs 3 in the second direction Y, allowing the two first tabs 3 to be welded to the first terminal post 6. In the case where the first terminal post 6 reserves a sufficient welding area for each of the two first tabs 3 in the first direction X and in the second direction Y respectively, the welding quality between each of the two first tabs 3 and the first terminal post 6 can be ensured. The second tabs 4 can be arranged similarly, and detailed description will be omitted here.

This embodiment also provides a battery pack comprising a shell and a plurality of the aforementioned battery cells, and the plurality of battery cells are arranged within the shell and electrically connected to one another. The battery pack is configured to integrate these battery cells, so as to provide sufficient power to electric equipment. By arranging the aforementioned battery cells in the battery pack, not only the space utilization of the battery pack as a whole is improved, but also the fast-charging performance is enhanced.

The above description is merely a preferred embodiment of this disclosure. It should be noted that those skilled in the art may make various modifications and substitutions without departing from the technical principles of this disclosure, and such modifications and substitutions shall be fallen in the scope of protection of the present disclosure.

## Claims

1. A battery cell, **characterized by** comprising:
a housing (1), having an opening (11);
a cell assembly (8), disposed in the housing (1), wherein the cell assembly (8) comprises a jelly roll (2) and a plurality of first tabs (3), the plurality of first tabs (3) are each disposed at an end of the jelly roll (2) facing the opening (11) and electrically connected to the jelly roll (2), and the plurality of first tabs (3) are arranged at intervals in a first direction (X);
a top cover (5), disposed at the opening (11) and covering the opening (11);
a first terminal post (6), arranged on the top cover (5), wherein the first terminal post (6) is welded to the plurality of first tabs (3) simultaneously to electrically connect the first terminal post (6) to the plurality of first tabs (3).

2. The battery cell according to claim 1, **characterized in that** the battery cell further comprises:
a second terminal post (7), arranged on the top cover (5);
wherein the cell assembly (8) further comprises a second tab (4) disposed at the end of the jelly roll (2) facing the opening (11) and electrically connected to the jelly roll (2), the plurality of first tabs (3) and the second tab (4) are spaced apart in the first direction (X), the second tab (4) has opposite polarity to the plurality of first tabs (3), and the second terminal post (7) is welded to the second tab (4) to electrically connect the second terminal post (7) to the second tab (4).

3. The battery cell according to claim 2, **characterized in that** a plurality of the second tabs (4) are provided, the second terminal post (7) is welded to the plurality of the second tabs (4) simultaneously, and a number of the plurality of first tabs (3) is different from that of the plurality of the second tabs (4).

4. The battery cell according to claim 2, **characterized in that** in the first direction (X), a numerical relationship among a length L₁ of the jelly roll (2), a number N₁ of the plurality of first tabs (3), a length L₂ of each of the plurality of first tabs (3), a number N₂ of the second tabs (4) and a length L₃ of each of the second tabs (4) is as follows: 1/3 < (N₁×L₂+N₂×L₃)/L₁ < 2/3.

5. The battery cell according to claim 1, **characterized in that** the plurality of first tabs (3) are staggered in a second direction (Y), and the first direction (X) and the second direction (Y) are intersected.

6. The battery cell according to claim 1, **characterized in that** the plurality of first tabs (3) are limited to two first tabs (3), and a projection of the first terminal post (6) onto a plane of the top cover (5) has overlaps with projections of the two first tabs (3) onto the plane of the top cover (5), enabling the first terminal post (6) to be welded to the two first tabs (3) simultaneously.

7. The battery cell according to claim 6, **characterized in that** in the first direction (X), the first terminal post (6) is positioned in a position between the two first tabs (3), allowing a portion of the first terminal post (6) contacting one of the two first tabs (3) to be welded to the one of the two first tabs (3).

8. The battery cell according to claim 6 or claim 7, **characterized in that** in a second direction (Y), the first terminal post (6) is positioned in a position between the two first tabs (3), allowing a portion of the first terminal post (6) contacting one of the two first tabs (3) to be welded to the one of the two first tabs (3);
wherein the first direction (X) is intersected with the second direction (Y).

9. The battery cell according to claim 2, **characterized in that** a plurality of the cell assemblies (8) are provided, the pluralities of first tabs (3) of the plurality of cell assemblies (8) are welded together, and the second tabs (4) of the plurality of cell assemblies (8) are welded together, so that the plurality of the cell assemblies (8) are connected to one another.

10. The battery cell according to claim 1, **characterized in that** the battery cell further comprises:
a connecting piece, wherein the connecting piece is arranged between the first terminal post (6) and the plurality of first tabs (3) in a third direction (Z), and the connecting piece is welded to the first terminal post and each of the plurality of first tabs (3) respectively, allowing the first terminal post (6) to be welded to the plurality of first tabs (3) simultaneously;
wherein the third direction (Z) intersects the first direction (X).

11. The battery cell according to claim 1, **characterized in that** a distance between immediately adjacent two of the plurality of first tabs (3) in the first direction (X) is defined as L₄, and 6 mm ≤ L₄ ≤ 18 mm.

12. A battery pack, **characterized by** comprising:
a shell;
a plurality of the battery cells according to any one of claims 1-11, arranged in the shell and electrically connected to one another.
